# EUROPÄISCHE PATENTSCHRIFT

(11) **EP 4 035 226 B1**
(45) Veröffentlichungstag und Bekanntmachung des Hinweises auf die Patenterteilung: **25.02.2026**
(21) Anmeldenummer: 20785908.3
(22) Anmeldetag: 14.09.2020
(51) Int. Cl.: H01R 43/00, H01R 9/26, H01R 13/514, H01R 13/518, H02B 1/052, H01R 12/72

(54) **MONTAGEHILFE**
MOUNTING AID
AIDE AU MONTAGE

(30) Priorität: 25.09.2019 DE 102019125797
(43) Veröffentlichungstag der Anmeldung: 03.08.2022
(73) Patentinhaber: HARTING Electric Stiftung & Co. KG, 32339 Espelkamp (DE)
(72) Erfinder: WOLF, Torsten, 32339 Espelkamp (DE)
(74) Vertreter: Eisenführ Speiser
(86) Internationale Anmeldenummer: PCT/DE2020/100799
(87) Internationale Veröffentlichungsnummer: WO 2021/058057

(56) Entgegenhaltungen:
- EP-A1- 0 756 364
- EP-A1- 1 717 921
- EP-B1- 0 756 364
- US-A1- 2004 111 879

## Beschreibung

### Beschreibung

Die Erfindung geht aus von einer Montagevorrichtung nach der Gattung des unabhängigen Anspruchs 1.

Derartige Montagevorrichtungen werden benötigt, um modulare Leiterkartensteckverbinder einfach, sicher und ohne weitere Werkzeuge mit einem Verbindungselement zu fixieren.

### Stand der Technik

Die DE 10 2017 119 287 A1 zeigt einen modularen Steckverbinder zur Montage auf einer Leiterplatte, wobei der Steckverbinder aus mehreren einzelnen Steckverbindermodulen zusammensetzbar ist und wobei die Steckverbindermodule mittels mindestens einem Verbinder verbindbar sind. Dazu weisen die Steckverbindermodule Schwalbenschwanzführungen auf, wobei der Verbinder sich bündig in die Steckverbindermodule einfügt.

Die US 2004/0111879 A1 stellt ein Installationswerkzeug für Leiterplattenkomponenten, vor umfassend ein Werkzeugkopf mit einer Oberfläche, die für den Einsatz in einer Presse vorgesehen ist; ein mit dem Werkzeugkopf verbundener Einsatz für die Aufnahme mindestens einer Leiterplattenkomponente und ein Pfosten, der angebracht ist und ich erstreckt von einer Seite des Werkzeugkopfes, um die richtige Ausrichtung des Werkzeugs in Bezug auf die Leiterplattenkomponente oder richtige Ausrichtung des Bauteils in Bezug auf die Leiterplatte zu gewährleisten.

Um den Platz einer Leiterkarte optimal nutzen zu können, werden die Module eines modularen Leiterkartensteckverbinders minimalistisch dimensioniert. Entsprechend sind sogenannte "männliche" Module, also Module eines Leiterkartensteckverbinders zur Aufnahme von Stiftkontakten, vergleichsweise dünnwandig ausgeformt, um eine besagte Schwalbenschwanzführung aufweisen/ aufnehmen zu können. Verbunden mit einem Verbindungselement ist diese dünnwandige Form kein Nachteil, allerdings sind einzelne Module, insbesondere der "männlichen" Ausführung, zunächst anfällig gegenüber unsachgemäßem Umgang.

Das Deutsche Patent- und Markenamt hat in der Prioritätsanmeldung zu vorliegender Anmeldung den folgenden Stand der Technik recherchiert: US 2004/0111879 A1.

### Aufgabenstellung

Die Aufgabe der Erfindung besteht darin, die Herausforderungen, welche sich während der Montage eines modularen Leiterkartensteckverbinders durch die dünnwandige Ausführung einiger Module ergeben, in einfacher und kostengünstiger Weise zu bewältigen.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

### Offenbarung der Erfindung

Die Aufgabe wird gelöst von einer Montagevorrichtung gemäß Anspruch 1. Die erfindungsgemäße Montagevorrichtung dient zur Unterstützung eines Verbindungsvorganges von zumindest einem Modul eines modularen Leiterkartensteckverbinders mit zumindest einem Verbindungselement. Dabei besteht die Montagevorrichtung aus zumindest einer Grundplatte und zumindest einer grundsätzlich lotrecht an der Grundplatte angeordneten, parallel zur Längsachse der Grundplatte verlaufenden Feder, wobei die Feder zumindest teilweise dazu auslegt ist, das zumindest eine Modul aufzunehmen. wobei die Feder mit einer parallel zur Längsachse der Grundplatte verlaufenden Nut ausgeführt ist und wobei die Nut dazu ausgelegt ist, zumindest ein Kontaktelement zumindest eines Moduls in sich aufzunehmen. Damit ist gemeint, dass zumindest ein elektrisch leitendes Kontaktelement eines von der Montagevorrichtung aufgenommenen Moduls in der Nut verbracht wird. Idealerweise geschieht diese Verbringung des Kontaktelements ohne direkten Kontakt zur Montagevorrichtung. Anders ausgedrückt wird ein Modul derart auf die Montagevorrichtung aufgebracht, dass ein etwa u-förmiger Isolierkörper des Moduls mit der Öffnung des u auf die Feder der Montagevorrichtung aufgesetzt wird. Ein innerhalb der u-Form befindliches Kontaktelement 30 wird dabei in der Nut innerhalb der Feder verbracht, sodass die Montage der Module mit dem Verbindungselement für die Kontaktelemente schadlos vorgenommen wird. Unter "Montagevorrichtung" ist in diesem Zusammenhang ein Hilfswerkzeug gemeint, welches für den Zweck der Montage eingesetzt wird. Nach der Montage wird die Montagevorrichtung von den zu montierenden Modulen entfernt und kann erneut verwendet werden. Als "modularer Leiterkartensteckverbinder" sind grundsätzlich Steckverbinder für Leiterkarten gemeint. Dabei lassen sich die Leiterkartensteckverbinder aus mehreren, als "Modulen" bezeichneten Bausteinen zusammenstellen. Dabei können modulare Leiterkartensteckverbinder aus mehreren identischen Modulen oder aus beliebigen verschiedenen Modulen zusammengestellt werden. Mit dem Begriff "Grundplatte" ist zunächst eine einfache, prinzipiell plane Platte gemeint. Weitere Ausführungen können angeordnete Formelemente oder Ausnehmungen vorsehen. Unter dem Begriff "Feder" sei zunächst eine aus der Grundplatte hervorragende Ebene zu verstehen.

In einer bevorzugten Ausführungsform weist die Feder der Montagevorrichtung wenigstens größtenteils eine der Länge der Grundplatte gleichende Länge auf. Die Montagevorrichtung nimmt also etwa die Form eines T-Profils an. Somit kann die gesamte Länge der Montagevorrichtung für die Aufnahme zu verbindender Module genutzt werden.

In einer weiterentwickelten Ausführungsform ist die Feder an Ihrer der Grundplatte gegenüberliegenden Seite mit zumindest einer abgefasten Kante ausgeformt. Sinnvollerweise befinden sich bei einer Feder mit eingelassener Nut Fasen beidseitig nach außen gerichtet. Damit ist gemeint, dass die durch die Nut gebildeten zwei Stege der Feder zumindest an Ihrer von der Nut abgewandten Seite jeweils eine Fase aufweisen. Durch die Fasen kann ein besseres und schnelleres Eingreifen der Montagevorrichtung in die entsprechenden, zu montierenden Module gewährleistet werden.

Eine clevere Ausführungsform sieht weiterhin vor, dass die Feder entlang ihrer Längsachse zumindest an einem Ende zumindest einen Anschlag aufweist, wobei der Anschlag quer und lotrecht zur Längsachse der Grundplatte angeordnet ist. Anders gesagt wird quer zur Feder und lotrecht zur Grundplatte eine weitere Platte hinzugefügt. Diese Platte dient als Anschlag, um zu verbindende Module an diesem Anschlag auszurichten. Sofern die Feder mit einer Nut versehen ist, kann die Nut auch durch diese zusätzliche Platte ausgeformt sein.

Die Montagevorrichtung sieht in einer Ausführungsform weiterhin vor, dass die Grundplatte auf der gegenüberliegenden Seite der Feder zumindest eine Ausnehmung aufweist, wobei die Ausnehmung parallel zur Längsachse der Grundplatte verläuft. Diese Ausnehmung ist erfindungsgemäß derart ausgeformt, dass die gegensätzlichen Module der Module gehalten werden können, welche auf der Federseite montiert werden. Im weiteren Verlauf wird davon ausgegangen, dass auf der Federseite der Montagevorrichtung sogenannte "männliche" Module aufgenommen und montiert werden. Folglich ist die Ausnehmung dazu vorgesehen, zumindest eine Umfangsseite der korrespondierenden "weiblichen" Module aufzunehmen, um deren Montage zu erleichtern. Das bedeutet, dass die Montagevorrichtung in der Lage ist, universell für die Montage von korrespondierenden Modulen eines Systems für modulare Leiterkartensteckverbinder ausgelegt ist.

Sinnvollerweise sieht eine Ausführungsform vor, dass die Ausnehmung wenigstens größtenteils über die Länge der Grundplatte verfügt. Wird die Feder in einer entsprechenden Ausführungsform ebenfalls über eine vergleichbare Länge ausgeformt, lassen sich korrespondierende Module der Leiterkartensteckverbinder einfacher Montieren. Dadurch wird die Montage von zueinander abgestimmten modularen Leiterkartensteckverbindern sowohl in "männlicher" als auch in "weiblicher" Ausführung durch eine Montagevorrichtung vereinfacht.

In einer weiteren Ausführungsform der Montagevorrichtung ist die Grundplatte zur Ausnehmung hin mit zumindest einer abgefasten Kante ausgeformt. Auch bei der Ausnehmung soll die Fase für einen schnelleren Eingriff von Montagewerkzeug und zu verbindenden Modulen eines Leiterkartensteckverbinders sorgen. Weiterhin kann ein entsprechendes Modul selbst mit einer abgefasten Kante ausgeführt sein, wodurch ein sicherer Halt des Moduls in der Montagevorrichtung erzielt wird.

Schließlich sieht eine Ausführungsform vor, die Ausnehmung zumindest an einem Ende zumindest einen Anschlag zu versehen, wobei der Anschlag quer und lotrecht zur Längsachse der Grundplatte angeordnet ist. Dieser Anschlag sorgt für eine einfache und sichere Möglichkeit, zu verbindende Module vor der Verbindung mit einem Verbindungselement auszurichten. Dabei kann der Anschlag mehrteilig ausgeführt sein. Außerdem kann der Anschlag formschlüssig an der Grundplatte angeordnet sein. Der Anschlag kann alternativ kraftschlüssig an der Grundplatte angebracht sein. Der Anschlag wird bevorzugt stoffschlüssig an der Grundplatte angeformt.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung einer erfindungsgemäßen Montagevorrichtung;
- Fig. 2: eine weitere perspektivische Darstellung einer erfindungsgemäßen Montagevorrichtung mit aufgesetzten Modulen eines modularen Leiterkartensteckverbinders;
- Fig. 3: Eine rückseitige Darstellung einer erfindungsgemäßen Montagevorrichtung;
- Fig. 4: Eine rückseitige Darstellung einer erfindungsgemäßen Montagevorrichtung mit aufgesetzten Modulen eines modularen Leiterkartensteckverbinders.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

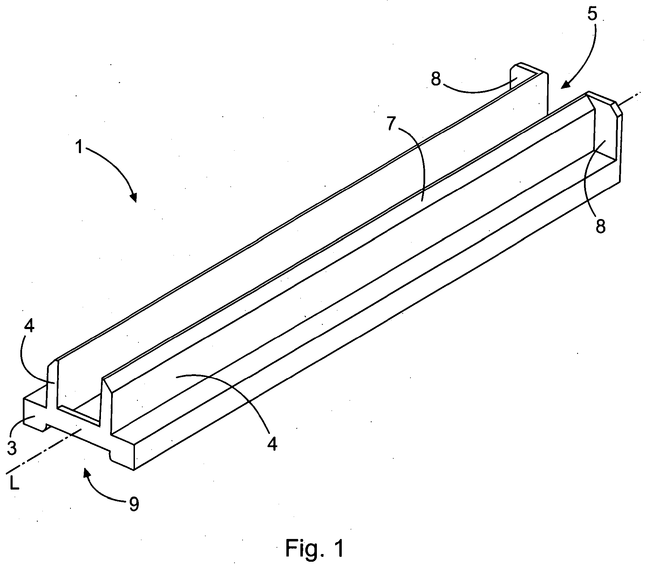

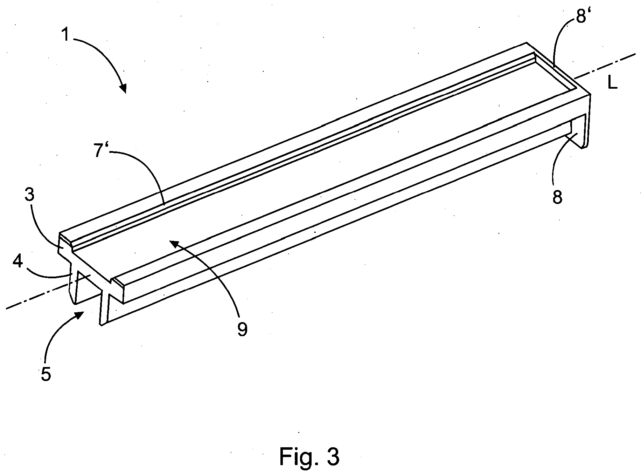

Die Fig.1 zeigt eine bevorzugte Ausführungsform einer erfindungsgemäßen Montagevorrichtung 1. Die dargestellte Ausführungsform weist zunächst die Grundplatte 3 auf. Aus der Grundplatte 3 ragt eine Feder 4 lotrecht heraus. Die Feder 4 verläuft grundsätzlich parallel zur Längsachse L der Grundplatte 3. Die Feder 4 ist mit einer Nut 5 versehen. In der Darstellung wird deutlich, dass die Feder 4 an den der Nut 5 abgewandten Seiten jeweils eine abgefaste Kante 7 aufweist. An der Feder 4 befindet sich eine Platte, die als Anschlag 8 fungiert. Diese als Anschlag 8 geformte Platte ist lotrecht zur Grundplatte 3 und quer zur Längsachse L der Grundplatte 3 ausgerichtet. Dieser Anschlag 8 ist durch die Nut 5 in dieser Ausführungsform in zwei Abschnitte geteilt. Angedeutet erkennbar ist auch, dass die Grundplatte 3 an ihrer erst ab Fig. 3 dargestellten Rückseite eine Ausnehmung 9 aufweist.

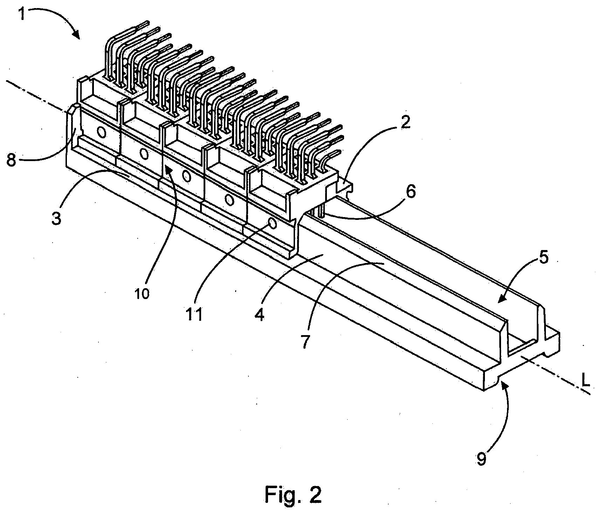

In der Fig. 2 wird eine im Vergleich zur Fig. 1 um etwa 90° horizontal geschwenkte Darstellung der erfindungsgemäßen Montagevorrichtung 1 gezeigt. Diese Darstellung ist weiterhin wenigstens teilweise mit beispielhaften Ausführungen von Modulen 2 eines modularen Leiterkartensteckverbinders belegt. Dargestellt sind fünf Module 2. Die dargestellten Module 2 sind identisch, jedoch können auch Module eingesetzt werden, die zu dem verwandten System gehören, aber nicht mit den dargestellten Modulen 2 identisch sind. Die dargestellten "männlichen" Module 2 bilden in der dargestellten Ausführungsform grundsätzlich ein U-Profil. Innerhalb des U-Profils der Module 2 sind Kontaktelemente 6 angeordnet. Damit diese Kontaktelemente 6 nicht beschädigt werden, ist die in der Feder 4 ausgeformte Nut 5 vorgesehen. Die Kontaktelemente 6 können während der Montage des modularen Leiterkartensteckverbinders in der Nut 5 verweilen, sobald die Module 2 auf der Montagevorrichtung 1 aufgesetzt sind. Die abgefasten Kanten 7 der Feder 4 schmiegen sich in dieser Ausführungsform an eine keilförmige Ausformung in dem dargestellten Modul 2 an. Der Anschlag 8 sorgt dafür, dass alle aufgesetzten Module 2 entlang der Längsachse L gegen den Anschlag 8 geschoben werden können. Dadurch wird die Anbringung des Verbindungselements (nicht dargestellt) weiter vereinfacht.

Geschickterweise weisen die Module 2 an ihrer Schwalbenschwanznut 10 Formelemente 11 auf, welche mit einem Verbindungselement in Eingriff gebracht werden, um die Module 2 in axialer Richtung an dem schwalbenschwanzförmigen Verbindungselement zu sichern.

Eine Ansicht der Rückseite, beziehungsweise der Unterseite der Montagevorrichtung 1 wird in Fig. 3 dargestellt. Hierbei ist erkennbar, dass eine Ausnehmung 9 parallel zur Längsachse L der Grundplatte 3 ausgeformt ist. Die Übergänge zwischen Grundplatte 3 und Ausnehmung 9 sind mit abgefasten Kanten 7' versehen. Diese erleichtern das Einsetzen der entsprechend zu verbindenden Module 2'. Auch auf dieser Seite der Montagevorrichtung 1 ist ein Anschlag 8' vorgesehen. Dieser sorgt erneut für eine Begrenzung des Verschiebewegs aufgesetzter Module 2' in einer Richtung der Längsachse L. Eine Verwendung von Anschlägen an beiden Enden der Längsachse L der Grundplatte 3 kann ebenfalls vorteilhaft sein. Weiterhin kann der Anschlag8' mit dem Anschlag 8 verbunden sein. In der gezeigten Ausführung besteht die gesamte Montagevorrichtung 1 aus einem gegossenen Bauteil. Damit ist auch gemeint, dass Anschlag 8' und Anschlag 8 aus einem Bauteil geformt sein können, sollte die Montagevorrichtung 1 mehrteilig hergestellt sein.

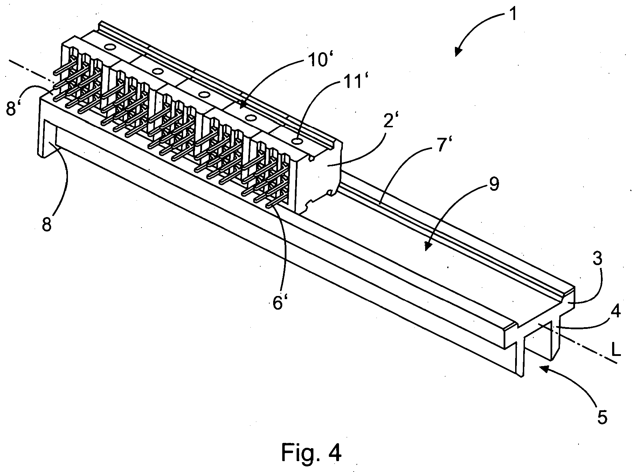

Eine mit Modulen 2' wenigstens teilweise bestückte Rückseite, beziehungsweise Unterseite der Montagevorrichtung 1 wird in Fig. 4 dargestellt. Verglichen mit Fig.3 ist die Darstellung um etwa 90° in horizontaler Ebene geschwenkt. Ähnlich wie in Fig. 2 werden fünf Module 2' gezeigt, wobei es sich bei den gezeigten Modulen 2' um "weibliche" Module 2' handelt. Diese Module 2' lassen sich, nachdem sie mit einem Verbindungselement (nicht gezeigt) fixiert sind als "weiblicher" Part eines modularen Leiterkartensteckverbinders verwenden. Dieser modulare Leiterkartensteckverbinder lässt sich mit einem "männlichen", korrespondierend bestückten Leiterkartensteckverbinder durch ineinanderstecken verbinden. Die Module 2' werden auf einer Seite in die Ausnehmung 9 eingesetzt, welche mit einem Verbindungselement verbunden wird. Dabei lässt die Darstellung erkennen, dass eine Fase an dem Modul 2' gemeinsam mit einer abgefasten Kante 7' dafür sorgt, dass bei aufbringen von einer Kraft in Richtung Montagevorrichtung 1 das Modul 2'sicher in die Ausnehmung 9 gepresst und dort von den Kanten der Ausnehmung 9 zur Grundplatte 3 gehalten wird. Geschickterweise wird die Ausnehmung 9 grade so tief ausgeführt, dass die Kontaktelemente 6' des Moduls 2' nicht direkt mit der Grundplatte 3 in Berührung kommen. Dadurch wird verhindert, dass bei einem Montagevorgang die Kontaktelemente 6' beschädigt/ beeinflusst werden.

Auch wenn in den Figuren verschiedene Aspekte oder Merkmale der Erfindung jeweils in Kombination gezeigt sind, ist für den Fachmann-soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Montagevorrichtung
- 2, 2': Modul
- 3 .: Grundplatte
- 4: Feder
- 5: Nut
- 6, 6': Kontaktelement
- 7, 7': abgefaste Kante
- 8, 8': Anschlag
- 9: Ausnehmung
- 10, 10': Schwalbenschwanznut
- 11, 11': Formelement

- L: Längsachse

## Patentansprüche

1. Montagevorrichtung (1) zur Unterstützung eines Verbindungsvorganges von zumindest einem Modul (2, 2') eines modularen Leiterkartensteckverbinders mit zumindest einem Verbindungselement,
**wobei** die Montagevorrichtung (1) aus zumindest einer Grundplatte (3) und zumindest einer grundsätzlich lotrecht an der Grundplatte (3) angeordneten, parallel zur Längsachse (L) der Grundplatte (3) verlaufenden Feder (4) ausgebildet ist, wobei die Feder (4) zumindest teilweise dazu auslegt ist, das zumindest eine Modul (2) aufzunehmen
**dadurch gekennzeichnet, dass**
die Feder (4) eine parallel zur Längsachse (L) der Grundplatte (3) verlaufende Nut (5) aufweist, wobei die Nut (5) dazu ausgelegt ist, zumindest ein Kontaktelement (6) eines Moduls (2) in sich aufzunehmen.

2. Montagevorrichtung (1) nach Anspruch 1
**dadurch gekennzeichnet, dass**
die Feder (4) wenigstens größtenteils eine der Länge der Grundplatte (3) gleichende Länge aufweist.

3. Montagevorrichtung (1) nach einem der vorstehenden Ansprüche **dadurch gekennzeichnet, dass**
die Feder (4) an der der Grundplatte (3) gegenüberliegenden Seite mit zumindest einer abgefasten Kante (7) ausgeformt ist.

4. Montagevorrichtung (1) nach einem der vorstehenden Ansprüche **dadurch gekennzeichnet, dass**
die Feder (4) zumindest an einem Ende zumindest einen Anschlag (8) aufweist, wobei der Anschlag (8) quer und lotrecht zur Längsachse (L) der Grundplatte (3) angeordnet ist.

5. Montagevorrichtung (1) nach einem der vorstehenden Ansprüche **dadurch gekennzeichnet, dass**
die Grundplatte (3) auf der gegenüberliegenden Seite der Feder (4) zumindest eine Ausnehmung (9) aufweist, wobei die Ausnehmung (9) parallel zur Längsachse (L) der Grundplatte (3) verläuft.

6. Montagevorrichtung (1) nach Anspruch 5
**dadurch gekennzeichnet, dass**
die Ausnehmung (9) wenigstens größtenteils eine der Länge der Grundplatte (3) gleichende Länge aufweist.

7. Montagevorrichtung (1) nach einem der Ansprüche 5 oder 6
**dadurch gekennzeichnet, dass**
die Grundplatte (3) zur Ausnehmung (9) hin mit zumindest einer abgefasten Kante (7') ausgeformt ist.

8. Montagevorrichtung (1) nach einem der Ansprüche 5 bis 7
**dadurch gekennzeichnet, dass**
die Ausnehmung (9) zumindest an einem Ende zumindest einen Anschlag (8') aufweist, wobei der Anschlag (8') quer und lotrecht zur Längsachse (L) der Grundplatte (3) angeordnet ist.

## Claims

1. A mounting device (1) for supporting a connection process of at least one module (2, 2') of a modular circuit board connector to at least one connection element,
wherein
the mounting device (1) is formed from at least one base plate (3) and at least one tongue (4) arranged principally perpendicularly on the base plate (3) and extending parallel to the longitudinal axis (L) of the base plate (3), wherein the tongue (4) is at least partially designed to receive the at least one module (2),
**characterized in that**
the tongue (4) has a groove (5) extending parallel to the longitudinal axis (L) of the base plate (3), wherein the groove (5) is designed to accommodate at least one contact element (6) of a module (2).

2. The mounting device (1) as claimed in claim 1,
**characterized in that**
the tongue (4) has, at least for the most part, a length equal to the length of the base plate (3).

3. The mounting device (1) as claimed in one of the preceding claims,
**characterized in that**
the tongue (4) is formed with at least one chamfered edge (7) on the side opposite the base plate (3).

4. The mounting device (1) as claimed in one of the preceding claims,
**characterized in that**
the tongue (4) has at least one stop (8), at least at one end, wherein the stop (8) is arranged transversely and perpendicular to the longitudinal axis (L) of the base plate (3).

5. The mounting device (1) as claimed in one of the preceding claims,
**characterized in that**
the base plate (3) has at least one recess (9) on the opposite side of the tongue (4), wherein the recess (9) extends parallel to the longitudinal axis (L) of the base plate (3).

6. The mounting device (1) as claimed in claim 5,
**characterized in that**
the recess (9) has, at least for the most part, a length equal to the length of the base plate (3).

7. The mounting device (1) as claimed in claim 5 or 6,
**characterized in that**
the base plate (3) is formed with at least one chamfered edge (7') toward the recess (9).

8. The mounting device (1) as claimed in one of claims 5 to 7,
**characterized in that**
the recess (9) has at least one stop (8'), at least at one end, wherein the stop (8') is arranged transversely and perpendicular to the longitudinal axis (L) of the base plate (3).

## Revendications

1. Dispositif de montage (1) pour la prise en charge d'un processus de connexion d'au moins un module (2, 2') d'un connecteur de carte de circuit modulaire avec au moins un élément de connexion,
**dans lequel** le dispositif de montage (1) est formé d'au moins une plaque de base (3) et d'au moins un ressort (4) disposé en principe perpendiculairement à la plaque de base (3), s'étendant parallèlement à l'axe longitudinal (L) de la plaque de base (3), dans lequel le ressort (4) est au moins partiellement conçu pour recevoir l'au moins un module (2)
**caractérisé en ce que**
le ressort (4) présente une rainure (5) s'étendant parallèlement à l'axe longitudinal (L) de la plaque de base (3), dans lequel la rainure (5) est conçue pour recevoir au moins un élément de contact (6) d'un module (2) en lui-même.

2. Dispositif de montage (1) selon la revendication 1,
**caractérisé en ce que**
le ressort (4) présente au moins en grande partie une longueur égale à la longueur de la plaque de base (3).

3. Dispositif de montage (1) selon l'une quelconque des revendications précédentes
**caractérisé en ce que**
le ressort (4) est formé sur le côté opposé à la plaque de base (3) avec au moins un bord chanfreiné (7).

4. Dispositif de montage (1) selon l'une quelconque des revendications précédentes
**caractérisé en ce que**
le ressort (4) présente au moins une butée (8) au moins à une extrémité, dans lequel la butée (8) est disposée transversalement et perpendiculairement à l'axe longitudinal (L) de la plaque de base (3).

5. Dispositif de montage (1) selon l'une quelconque des revendications précédentes,
**caractérisé en ce que**
la plaque de base (3) présente, sur le côté opposé du ressort (4), au moins un évidement (9), dans lequel l'évidement (9) s'étend parallèlement à l'axe longitudinal (L) de la plaque de base (3).

6. Dispositif de montage (1) selon la revendication 5
**caractérisé en ce que**
l'évidement (9) présente au moins en grande partie une longueur égale à la longueur de la plaque de base (3).

7. Dispositif de montage (1) selon l'une quelconque des revendications 5 ou 6
**caractérisé en ce que**
la plaque de base (3) est formée vers l'évidement (9) avec au moins un bord chanfreiné (7').

8. Dispositif de montage (1) selon l'une quelconque des revendications 5 à 7
**caractérisé en ce que**
l'évidement (9) présente au moins une butée (8') au moins à une extrémité, dans lequel la butée (8') est disposée transversalement et perpendiculairement à l'axe longitudinal (L) de la plaque de base (3).
